# EUROPEAN PATENT SPECIFICATION

(11) **EP 4 010 832 B1**
(45) Date of publication and mention of the grant of the patent: **30.04.2025**
(21) Application number: 20764815.5
(22) Date of filing: 06.08.2020
(51) Int. Cl.: G06F 21/62, G06F 11/34, G06Q 30/02

(54) **PROTECTING USER PRIVACY IN USER INTERFACE DATA COLLECTION**
SCHUTZ DES BENUTZERDATENSCHUTZES IN EINER BENUTZERSCHNITTSTELLENDATENSAMMLUNG
PROTECTION DE LA CONFIDENTIALITÉ DE L'UTILISATEUR DANS LA COLLECTE DE DONNÉES D'INTERFACE UTILISATEUR

(30) Priority: 06.08.2019 US 201962883551 P
(43) Date of publication of application: 15.06.2022
(73) Proprietor: FULLSTORY, INC., Atlanta GA 30309 (US)
(72) Inventor: WEBBER, Joel Grayson, Atlanta, Georgia 30309 (US)
(74) Representative: Fish & Richardson P.C.
(86) International application number: PCT/US2020/045208
(87) International publication number: WO 2021/026356

(56) References cited:
- US-A1- 2017 323 026
- US-A1- 2019 146 616
- US-B1- 10 282 479

## Description

### BACKGROUND

User interfaces facilitate user interaction with various resources and applications. For example, user interfaces generally include various interactive elements that enable a user to input data (e.g., using text boxes), make data selections (e.g., using radio buttons, check boxes, or drop down menus), navigate to resources or application pages (e.g., by interacting with an embedded link), and change visual aspects of the user interface (e.g., rotating a device, resizing a window, scrolling to other portions of a document, or using zoom controls).

As user satisfaction with a given website or application can depend on the user's experience with the user interface, user sessions with user interfaces can be recorded and played back to publishers. Some user interfaces, such as user interfaces of banking web pages or applications, present private data or other private content of the users who are interacting with the user interfaces. As this content is typically not useful in assessing the quality and functionality of the user interfaces and should not be presented to other parties, care should be taken to ensure that such content is not part of the playback.

US 2019/146616 A1 describes systems and methods for monitoring user interaction with a remote computer are provided. More specifically, the systems and methods of the present invention allow for the remote tracking and replay of user interaction with a remote computer or webpage. One aspect of the invention allows user interaction data to be replayed on an embedded browser on a replay server. The replayed user interaction data may be converted to a video file to facilitate playback of the interaction data substantially independent of the replay server.

US 10 282 479 B1 describes methods, systems, and apparatus, including computer programs encoded on a computer storage medium, for collecting data regarding resource views. In one aspect, a method includes generating a tag that includes instructions that, upon execution of the instructions, cause a device to perform operations including identifying content located in at least one particular portion of a structured resource. The particular portion can be specified by the instructions. The operations may include generating resource view data that includes parameters identifying the device and at least a portion of the identified content. The operations may include sending the resource view data to a server. A request for the tag may be received. The tag may be provided in response to the request. US 2017/323026 A1 describes generating replay of a webpage is provided. In response to determining that a document object model (DOM) replay of the webpage is a differential DOM replay, a base DOM of the webpage, base DOM differentials of the webpage, and user interactions with the webpage are retrieved. The base DOM of the webpage is patched with the base DOM differentials of the webpage to generate a patched DOM corresponding to the webpage. The user interactions with the webpage are overlaid on the patched DOM to generate the replay of the webpage.

### SUMMARY

In general, one innovative aspect of the subject matter described in this specification can be embodied in methods that include providing, to a client device, configuration data specifying a set of whitelisted user interface elements of a publisher. Each whitelisted user interface element is a user interface element from which content is eligible to be collected and transmitted from the client device. Event data for a user session in which a user interacted with one or more user interfaces of the publisher. The event data includes interface data specifying a structure of the one or more user interfaces presented during the user session, user interaction data specifying user interactions with the one or more user interfaces, and content of one or more first presented user interface elements that (i) were presented by the one or more user interfaces and (ii) match a whitelisted user interface element specified by the configuration data. The client device does not provide content of one or more second presented user interface elements that do not match a whitelisted user interface element specified by the configuration data. Playback of the user session is generated based on the event data. The playback presents the one or more user interfaces, the content of the one or more first presented user interface elements, the user interactions with the one or more user interfaces, and, for content of the one or more second user interface elements, a masking element that represents the content of the second user interface element while masking actual content of the second user interface element. Other embodiments of this aspect include corresponding methods, apparatus, and computer programs, configured to perform the actions of the methods, encoded on computer storage devices.

These and other embodiments can each optionally include one or more of the following features. In some aspects, the configuration data specifies, for each whitelisted user interface element, a given field within a given set of tags. The presented user interface element can match a whitelisted user interface element whenever the presented user interface element is defined by the given field of the given set of tags. The given set of tags can include tags of a document object model that represents, for each of the one or more user interfaces, the structure of the user interface. The one or more user interfaces can include Hypertext Markup Language (HTML) documents and the given set of tags comprise HTML tags.

Some aspects can include detecting, during the playback of the user session, a user interaction with a user interface being presented by at least one of the one or more user interfaces in the playback of the user session and, in response to detecting the user interaction, changing a whitelist status of the user interface element. The whitelist status specifies whether the content item includes content to be collected from the client device. Changing the whitelist status of the content item can include determining, from the interface data specifying the structure of the user interface that includes the user interface element, a field that includes content of the user interface element. Whenever the field is on a whitelist that specifies the whitelisted content, the field is removed from the whitelisted content. Whenever the field is not on the whitelist that specifies the whitelisted content, the field is added to the whitelist.

In some aspects, generating playback of the user session can include identifying, in the interface data specifying the structure of the one or more user interfaces presented during the user session, tags for a given second user interface element, determining a presentation size of an object that includes content of the given second user interface element, and sizing a masking element that represents the content of the given second user interface element based on the presentation size of the object.

In some aspects, providing, to a client device, configuration data specifying a set of whitelisted user interface elements can include receiving, from the client device, a request for the configuration data in response to the application loading one of the one or more user interfaces and in response to receiving the request, providing the configuration data.

Particular embodiments of the subject matter described in this specification can be implemented so as to realize one or more of the following advantages. The techniques described in this document protect users' privacy by preventing content, e.g., private or sensitive content, from being collected from the devices of the users while still collecting enough information to generate playback of user sessions that accurately reflects the way in which the user interface(s) was presented and the changes to the user interface(s) that occurred during the user sessions.

Text replacement techniques that use the size of an object that includes the text to properly size a masking element that represents the text during playback accurately reflects the way in which the text was presented without presenting the actual text. These techniques are more accurate and require less processing power and fewer computational resources to accurately size text replacements than techniques that replace the actual text with other text. Replacing text with non-textual representations further protects users' privacy relative to techniques that substitute other text for private text by precluding the ability to reverse such substitutions. Techniques described in this document for determining which objects to collect size information reduces the computational costs (e.g., in terms of resources, processing power, time, etc.) in obtaining the size information relative to techniques that obtain size information for all objects.

Providing configuration data specifying whitelisted content that should be collected to an application (e.g., a web browser or native application) when a user interface is loaded enables publishers to update the whitelisted content at any time without having to make programmatic changes to the code of the web page or native application. This enables quick and dynamic changes to the data that is collected without requiring time consuming and costly processes of generating, testing, and distributing updates. User interfaces described in the document can further simplify and increase the speed of this process by allowing publishers to simply select content that should be whitelisted or removed from the whitelist during playback of a user session.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which users interact with user interfaces.
FIG. 2A is an illustration of an example user interface presented during a user session.
FIG. 2B shows a portion of an example hypertext markup language (HTML) document used to generate the user interface of FIG. 2A.
FIG. 2C is an illustration of a tree structure of a portion of the user interface of FIG. 2A.
FIG. 3 is an illustration of an example interactive interface for replaying a user session.
FIG. 4 is a flow chart of an example process for generating and providing an interactive interface that presents playback of a user session.
FIG. 5 is a flow chart of an example process for updating a whitelist status of a user interface element.

Like reference numbers and designations in the various drawings indicate like elements.

### DETAILED DESCRIPTION

The techniques described in this document allow publishers to optimize their user interfaces (e.g., a web pages or application interfaces) so that users have a positive experience interacting with the user interfaces while also protecting the privacy of the users that view and interact with the user interfaces. As the need to protect user privacy has become a growing concern, these techniques are vital in any technology that touches user data. The techniques described in this document prevent user data from ever being collected or transferred from a user device, ensuring that the data cannot be intercepted during transmission or stolen from another device. At the same time, very specific data, such as data related to the structure of the user interface and the size of elements presented in the user interface, can be collected to recreate user sessions that accurately reflect the user interfaces presented to the users, the changes to the user interfaces that occurred during the user sessions, and the user interactions that occurred during the user sessions without showing actual user data.

For example, a website or mobile application of a bank shows customers their balances, transactions, and other data that is private to the user. The actual text showing the transactions and balances is not required in assessing the quality of the website or application and the customers would prefer that such data is not shared with a third party that collects user interface data for playback and analysis. The techniques described in this document prevent such data from being collected and replaces the data in playbacks such that the playbacks accurately reflect the user interfaces viewed by the customer, but without the user's actual data.

The techniques also give publishers fine tuned control over what data is collected during user sessions with their user interfaces. A publisher can easily select content to be collected or blocked simply by interacting with (e.g., selecting) the content during playback. For example, if a retailer decides that it wants to view the quantity of items placed in a virtual shopping cart to view how users interact with a quantity selector and to assess the functionality of the quantity selector, the retailer can simply select the quantity selector during playback of one of the user sessions. When another customer subsequently views the same web page or application page, the quantity of items selected using the quantity selector will be recorded for playback of that user session. The retailer can later stop the collection of the quantities simply by interacting with (e.g., selecting) the quantity selector again during the playback of a user session. This can all be handled on the back end (e.g., at the server) without the retailer having to make any programmatic changes to the web page or application.

Publishers (e.g., an entity that provides user interfaces, such as web pages and/or application interfaces) generally want to make user interfaces user friendly so that users will have a positive experience. Having information about user interactions with a given user interface (e.g., a web page or an application interface) and events that occur during user sessions with user interfaces can help a publisher quickly identify aspects of the user interfaces that can be changed to improve the user experience. These aspects can be identified using actual user interactions with the user interface, thereby eliminating the need to conduct external user surveys or rely on subjective feedback about the user interface. Rather, the users' actual recorded interactions with the user interface and/or classifications of these user interactions based on the characteristics of the interactions reveal areas of the user interface that can be changed to improve the user experience.

This document describes techniques for preventing the collection of specified content, e.g., content that may include sensitive or private data. This content can be replaced in the playback of a user session with content having the same size such that the user interface(s) presented in the playback reflect the user interface(s) presented during the actual user session. For example, if the size of an element used to replace text is larger than the actual text, this can cause other user interface elements to be presented incorrectly, e.g., on top of one another or in incorrect locations on screen.

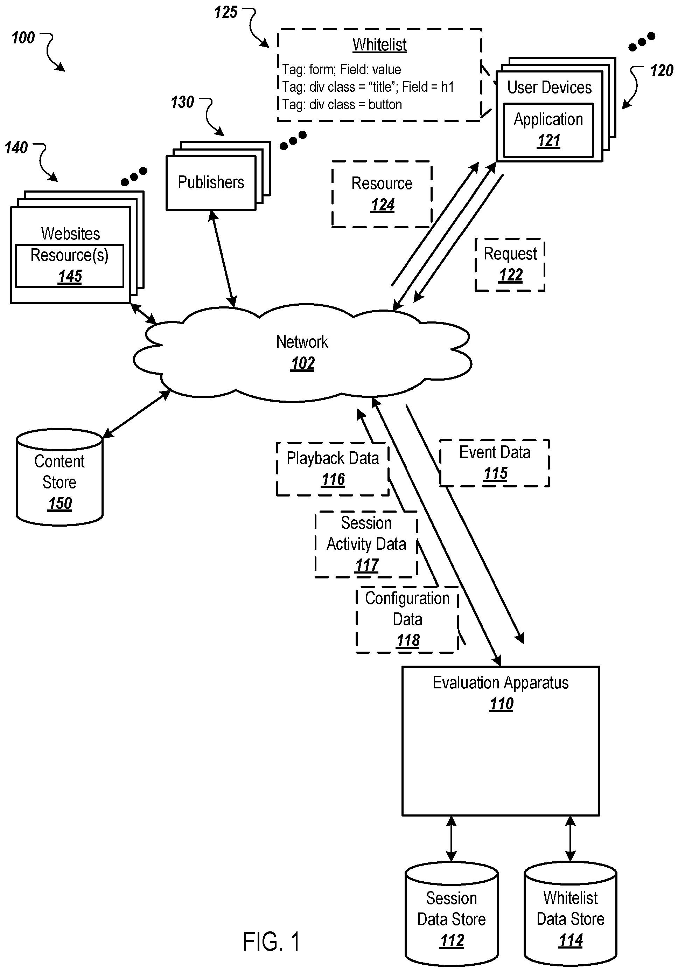

FIG. 1 is a block diagram of an example environment 100 in which users interact with user interfaces. The example environment 100 includes a network 102, such as a local area network (LAN), a wide area network (WAN), the Internet, or a combination thereof. The network 102 connects user devices 120, publishers 130, websites 140, and an evaluation apparatus 110. The example environment 100 may include many different user devices 120, publishers 130, and websites 140.

A website 140 is one or more resources 145 associated with a domain name and hosted by one or more servers. An example website is a collection of web pages formatted in HTML that can contain text, images, multimedia content, and programming elements, such as scripts. Each website 140 is maintained by a publisher 130, which is an entity that controls, manages and/or owns the website 140.

A resource 145 is any data that can be provided over the network 102. A resource 145 is identified by a resource address that is associated with the resource 145. Resources include HTML pages, word processing documents, and portable document format (PDF) documents, images, video, and feed sources, to name only a few. The resources can include content, such as words, phrases, images and sounds, that may include embedded information (such as meta-information in hyperlinks) and/or embedded instructions (such as scripts).

A user device 120, which is also referred to as a client device, is an electronic device that is capable of requesting and receiving resources over the network 102. Example user devices 120 include personal computers, mobile communication devices (e.g., tablet computer, smartphone, wearable device, etc.), and other devices that can send and receive data over the network 102. A user device 120 typically includes one or more user applications 121, such as a web browser and/or native applications, to facilitate the sending and receiving of data over the network 102. A native application is an application developed for a particular platform or a particular device. Publishers 130 can develop and provide the native applications to the user devices 120. For example, users can download the native applications to their user devices 120.

A user device 120 can submit a resource request 122 that requests a resource 145 from a website 140. In turn, data representing the requested resource 124 can be provided to the user device 120 for presentation by a web browser of the user device 120. The requested resource 145 can be, for example, a home page of a website 140, a web page from a social network, or another resource 145. The data representing the requested resource 124 can include data that causes presentation of content (e.g., embedded content such as text that is included in the code of the resource) at the user device 120. The content can include individual content items, such as individual images, buttons, icons, logos, groups of text, or other unit of content.

The data representing the requested resource 124 can also include instructions that cause the user device 120 to request remote content from a content store 150. The remote content can include, for example, images, content that is updated periodically, content used across multiple different resources, or content provided by third parties (e.g., other than the publisher). Thus, the remote content can be updated or changed without having to update the resource code.

A native application can also present content with or without the user device 120 submitting a request for the content. For example, some native applications, e.g., games, can present content stored at the user device 120 without requiring a request for content. Other native applications, e.g., news applications, can request and present content obtained from an application server maintained by the publisher 130 of the native application.

The evaluation apparatus 110 generates and provides, to devices of the publishers 130, interactive interfaces that present playback of user sessions with user interfaces of the publishers 130. To generate the interactive interfaces, the evaluation apparatus 110 collects event data 115 from the user devices 120. As used throughout this document, the phrase event data refers to data obtained from a user device 120 during a user session. A user session is a period of user interaction with one or more user interfaces, e.g., of a website or native application, of a publisher 130. In the context of a website, the user session can begin when a user requests a first resource from a given domain (e.g., example.com) and can end when a session end condition is met. In the context of a native application, the user session can begin when the user launches the native application and can end when a session end condition is met. The session end condition can be considered met when a specified amount of time elapses since a user interaction with a resource from the given domain or the native application. For example, if a user has not interacted with a resource from the given domain or the native application for 30 minutes (or some other amount of time), the session end condition can be considered to be met, thereby ending the session.

The session end condition can also be considered met when a session termination event occurs. The session termination event can be, for example, receipt of a session end message indicating that the user navigated away from the given domain or closed the browser, or a message specifying that the user closed the native application. Note that the session termination event may be stored at the user device 120 for some time (e.g., until the user reopens the browser or again launches the native application) prior to the user device 120 submitting the session end message to the evaluation apparatus 110.

The application 121 (e.g., a web browser or native application) can be configured to collect and send event data 115 related to the application 121 to the evaluation apparatus 110. For example, a publisher 130 can obtain computer-readable code from a third party that manages the evaluation apparatus 110 and install the code in a website or native application. The code can be in the form of an application programming interface (API), library, software development kit (SDK), code that launches an instrumentation module, or other code capable of collecting (or causing the application 121 to collect) data and send the data to the evaluation apparatus 110. As described below, the application 121 can be configured to access a whitelist 125 to determine what content can be collected and sent to the evaluation apparatus 110.

The event data 115 can include data that can be used to generate playback the user session. Rather than recording a video of the user session, the application 121 can collect event data 115 that is used to recreate the user session, e.g., create a playback of the user session. This reduces the amount of data that the user device 120 stores and sends over the network 102, reducing bandwidth consumption, data usage of a mobile device, and/or reduces the consumption of limited memory of the user device 120.

The event data 115 can be streamed from the user device 120 during a user session or collected at the user device 120 and sent to the evaluation apparatus 110 after the user session ends or periodically during the user session. The event data 115 can include interface data, user interaction data, and/or mutation data. The interface data specifies a structure of a user interface that is presented at a user device during the session. For example, when the user device 120 renders a resource, the interface data can be an initial Document Object Model (DOM) of the resource that is first presented at a user device 120. In this example, the DOM would specify that the resource is initially presented. For native applications, the interface data can include a tree structure that specifies a hierarchy of objects presented by the user interface of the native application.

The user interaction data specifies user interactions at the user device, and includes user interactions with the elements of the user interface. The user interaction data can specify mouse movements, user clicks, mouse hovers, highlights, text inputs, and any other user interactions that are performed at the user device. The user interaction data specify user interactions at the user device, and include user interactions with the elements of the user interface. The user interaction data can specify mouse movements, user clicks, mouse hovers, highlights, text inputs, and any other user interactions that are performed at the user device. For example, assume that a user clicks on an item in a list, in this example, the user interaction data will specify that a user click occurred and identify the element of the user interface that was clicked.

The user interaction data for an element with which a user interacted can identify the element using a unique identifier for the element. The identifier for an element can be in the form of an alphanumeric sequence that is unique for each user interface element. For resources that include a DOM, the resource identifier can be the identifier for an object, e.g., obtained from the DOM id property. This enables the evaluation apparatus 110 to aggregate the number of user interactions with each user interface element across multiple user sessions of multiple different users.

The user interaction data can also include timestamp information and/or sequential numbering information specifying when each user interaction occurred so that the user interaction data can be coordinated with other data. For example, the user interaction data can specify an absolute time at which a given user interaction occurred and/or a number representing when a given user interaction occurred relative to other user interactions a set of user interactions (e.g., user interaction 50 out of 150 total user interactions).

The user interaction data can be obtained, for example, by inserting an interaction tracking script in the code of the resource (or native application). The interaction tracking script will monitor mouse movement, clicks, and other user actions. In the context of a tablet or other touchscreen device, the interaction tracking script monitor user taps, swipes, pinches, and other user interactions with the touchscreen device. For some native applications, the user interaction data can be obtained using reflection techniques to determine which user interface elements are interacted with, as described in U.S. Patent Application No. 16/038,002, filed on July 17, 2018, entitled "Capturing and Processing Interactions with a User Interface of a Native Application". For some native applications, user interaction data can be obtained by swizzling methods that detect user interactions, as described in U.S. Patent Application No.16/370,574 filed on March 29, 2019, entitled Capturing and Processing Interactions with a User interface of a Native Application.

Using these techniques, the user interaction data can specify the actual user interface element interacted with based on the current structure of the DOM or view tree used to generate the user interface. This allows the data to specify the actual element event for dynamic user interfaces for which the structure can change and/or new elements can be presented by the user interface. For example, if a pop up window is presented, e.g., based on a script or in response to a user interaction, and element of the pop up window is interacted with, the interaction data can specify the element of the pop up window with which the interaction occurred as this data would be part of the DOM structure or the view tree of a native application.

The mutation data can specify each element that is rendered by the user device 120, and the mutation data can be provided to the evaluation apparatus 110 (e.g., either sequentially or in sets of mutation data that were accumulated over a specified time by the user device 120). Using the mutation data, the evaluation apparatus 110 can reconstitute the DOM in a manner similar to that performed by a browser. The mutation data can be obtained, for example, by inserting a mutation observer script in the code of the resource (or native application). The mutation observer script can monitor the resource for changes to the structure of the resource, record mutation data representing the changes in local memory at the user device 120, and provide the mutation data to a specified location (e.g., the evaluation apparatus 110). Providing mutation data rather than recorded video of the user session reduces the amount of data that has to be recorded and transferred across the network 102. This limits the negative latency impact and bandwidth consumption of this technology.

The mutation data specifies changes to the structure of the user interface that occur during a user session. For example, assume that a user clicks on an item in a list, which causes a first image to be replaced by a second image. In this example, the mutation observer script can detect the removal of the first image and the addition of the second image in the user interface, and store mutation data at the user device 120 specifying that the first image was removed from the user interface and that the second image was inserted into the user interface. Alternatively, or additionally, the mutation data can directly specify the replacement of the first image by the second image (e.g., rather than specifying both the remove mutation and the add mutation). Periodically, the user device 120 can upload (or otherwise transmit) the mutation data to the evaluation apparatus 110, which processes the mutation data as described in more detail below. Example techniques for obtaining event data and using the data to generate and present playback of user sessions are described in U.S. Patent No. 9,766,769, filed on December 31, 2014, entitled, "Evaluation of Interactions with a User Interface," and U.S. Patent Application No. 16/038,002, filed on July 17, 2018, entitled "Capturing and Processing Interactions with a User Interface of a Native Application".

In some implementations, the application 121 only provides, with the event data 115, content that is specified by the whitelist 125. That is, the application 121 excludes content that does not match whitelisted content specified by the whitelist 125. For example, the mutation observer script and/or other scripts or code used to collect and send data to the evaluation apparatus 110 can be configured to exclude content that is not included in the whitelist 125 from being provided to the evaluation apparatus 110. For ease of subsequent discussion, such code is collectively referred to as the application 121.

The whitelist 125 can specify user interface elements from which content (e.g., text, tables of text, images, videos, etc.) can be collected and provided to the evaluation apparatus 110. The user interface elements can be defined based on the structure of the document or code used to generate the user interfaces. For example, if the user interface is generated using an HTML document, an eXtensible Markup Language (XML) document, or a DOM that represents the document, the whitelisted user interface elements can be defined by nodes, tags, fields within tags, or attributes within tags. For example, the whitelist 125 can specify particular tags, fields, attributes, or other structural elements of the DOM from which content can be uploaded to the evaluation apparatus 110.

The whitelist 125 can include exclusion rules that define from which user interface elements the application 121 can obtain the content and provide the content to the evaluation apparatus 110. If the application 121 encounters, during collection of event data for a user session, user interface elements for which the whitelist does not include a corresponding rule, the application 121 may not provide the content within that structure element to the evaluation apparatus 110. Instead, the application 121 can provide structural data, e.g., the size of an element that includes that user interface element, so that a masking element can be presented during playback in place of the actual content. In this way, the playback can be generated without the actual content, but such that the size of the elements are correct during playback and content is not shifted into other places on screen that do not match the actual location during the user session.

In a particular example, the whitelist 125 specifies that content within the "value" field of "form" tags can be collected and uploaded to the evaluation apparatus 110. Content within other fields of the form tags will be excluded from the event data 115 as those fields are not included in the whitelist 125.

The publishers 130 can specify the whitelist 125 for their user interfaces. For example, a publisher 130 can select the user interface elements from which content can be collected and provided to the evaluation apparatus 110 from user devices 120. In some implementations, the publisher 130 can generate a whitelist for its user interfaces and provide the whitelist to the evaluation apparatus 110. A publisher 130 can also specify user interface specific whitelists. For example, the whitelist for a home page can be different from the whitelist for an account overview page. As described in more detail below, the publisher 130 can generate and update its whitelist by interacting with the playback of user sessions with its user interfaces.

The whitelist 125 can specify whitelisted user interface elements at different levels of granularity. For example, the whitelist 125 for a publisher 130 can specify that content from within form tags can be collected and provided to the evaluation apparatus 110. The whitelist 125 can also specify that only content within a particular field (e.g., the h1 field) of a particular class (e.g., the "Title" class) can be collected and provided to the evaluation apparatus 110. In this example, if the particular class includes other fields, the content within those fields will be excluded from the event data 115 and not provided to the evaluation apparatus 110.

In some implementations, a blacklist can supersede the whitelist. For example, if a blacklist specifies that content within a particular class cannot be collected and sent to the evaluation apparatus 110, the application 121 will not send content included in the class even if the class includes tags and/or fields in the whitelist 125. Each publisher 130 can specify one or more whitelists and one or more blacklists for its user interfaces.

When collecting and generating the event data 115 for a user session, the application 121 can compare presented user interface elements that were presented during the user session to the whitelisted user interface elements specified by the whitelist 125. For example, the application 121 can compare the tags that define a presented used interface element to the tags of the whitelisted user interface elements. If there is a match and the whitelist 125 does not specify particular fields, the application 121 can include the content in the event data 115 send to the evaluation apparatus 110. If the whitelist 125 specifies particular fields or particular attributes, the content is only included in the event data 115 if the content is within the particular fields or particular attributes.

In a particular example, the event data 115 can include a series of data items, e.g., tokens. The interface data can include, in the series of data, the tags, fields, attributes, etc. and their content of the initial DOM. Similarly, the mutation data can include, in the series of data, the tags, fields, attributes, etc. and their content of any changed portion of the DOM. The application 121 can compare the tags, fields, attributes, etc. in the series of data items to the whitelist. If content in the series of data items does not match the whitelist, the application 121 can remove the content from the event data 115 before the event data 115 is sent to the evaluation apparatus 110.

In some implementations, some content can be sent to the evaluation apparatus 110 without being compared to the whitelist. For example, programmatic elements, such as style fields, include data that can be used to generate accurate playback of a user session but would not include sensitive or private data. Such data can be sent to the evaluation apparatus 110 without being on the whitelist 125. For example, the application 121 can be configured to collect the text within a set of programmatic elements and include the text in the event data 115.

The evaluation apparatus 110 can store the whitelists 125 in a whitelist data store 114. When a user interface of a publisher 130 is loaded at a user device 120, the application 121 can request configuration data 118 that specifies the whitelist for the publisher 130. For example, the code installed on the website or within the native application can cause the application 121 to request the configuration data 118 from the evaluation apparatus 110. In response, the evaluation apparatus 110 can obtain the current whitelist 125 for the publisher 130 from the whitelist data store 114 and provide configuration data 118 that specifies the whitelist 125 to the user device 120. In this way, the application 121 can use the most current whitelist 125 for each user session without the publisher 130 having to make any programmatic changes to the application 121 or user interfaces for each update to the whitelist 125.

The event data 115 can be transmitted to the evaluation apparatus 110 in one or more data transmissions. For example, each type of event data 115 can be sent separate from each other type of event data. In another example, the event data 115 for each page can be transmitted to the evaluation apparatus 110 after the page is loaded on the user device 120.

The evaluation apparatus 110 receives the event data 115 from the user device 120 and stores the event data 115 in a session data store 112. For example, the evaluation apparatus 110 can store the event data 115 in an index of session data that is stored in the session data store 112. The index of session data can include, for each user session, the event data 115 received for that user session and optionally additional data, such as context data relating to user device 120 (e.g., the type of user device 120, the make and model of the user device 120, hardware and/or software of the device, the geographic location of the device, etc.). The software specified by the context data can include the type of browser, version of the browser, or other data about the browser.

The evaluation apparatus 110 can index the event data 115 and the contextual data in the session data store 112. This enables a user to search for user sessions that include particular events or attributes and/or filter user sessions based on the events or attributes. For example, the evaluation apparatus 110 can receive a query for one or more attributes, e.g., a type of browser and type of event (e.g., one or more rage clicks) that occurred during the user session. The evaluation apparatus 110 can use the index to identify each user session that occurred using the type of browser specified by the query and during which an event of the type specified by the query occurred. The evaluation apparatus 110 can then provide data that presents the identified user sessions in an interactive interface.

The evaluation apparatus 110 can, for each user session, use the event data 115 for the user session to generate playback of the user session (which can be stored and transmitted as playback data 116) and session activity data 117 for the user session. The evaluation apparatus 110 provides the playback data 116 and the session activity data 117 to the publisher 130 that provides the user interface(s) presented during the user session.

The playback of the user session presents the user interface(s) that were presented during the user sessions, visual changes to the user interface(s) that occurred during the user session, and user interactions (e.g., mouse movements) with the user interface(s) that occurred during the user session. At least a portion of the visual changes to the user interface(s) correspond to the mutation data for the user session. For example, the playback of the user session can show the publisher 130 the mouse movement over a user interface, a click on an item presented in a user interface, etc.

The playback of the user session can also present the content of presented user interface elements that were included in the event data 115 based on the presented user interface elements matching whitelisted user interface elements specified by the whitelist 125 for the publisher 130. For user interface elements that were not included in the event data 115 based on the user interface elements not matching whitelisted user interface elements, the playback can present a masking element that represents the content of the user interface element. In a particular example, the user interface can resemble a wireframe of the user interface, e.g., none of the user interface elements are whitelisted.

For example, if the content is an image, a blank box that represents the image can be presented in the playback of the user session. The blank box that represents the image can be the same size as the image (e.g., the same height and width) and be presented in the same location within the user interface as the image. In this way, the playback accurately reflects how the non-whitelisted image was presented in the user interface.

If the content is text, a bar or other masking element can be presented to represent the text. For example, a bar having rounded edges can be presented in the same location and with the same size as the text that the bar is representing. Using such a bar rather than using an algorithm that replaces the text prevents the ability to reverse the replacement and determine what the text was actually presented. In addition, the bar can be sized to the actual text more accurately than replacement text based on the differing widths of text characters. For example, if wider characters are used to replace thinner characters, the overall width of a replacement string of text would be larger than the overall length of the actual text, causing the replacement text to not accurately reflect the text that was presented during the user session. Such replacement text may be presented over other objects in the playback, cause shifting of other user interface elements during playback, or cause other errors in the playback such that the playback may not be as useful in assessing the quality of the user interface.

To determine the size of non-whitelisted content, the application 121 (or the evaluation apparatus 110) can measure the size of each portion of non-whitelisted content as it is presented in the user interface. However, measuring the size of objects can be computationally expensive. If the non-whitelisted content is the only content of a user interface element, the evaluation apparatus 110 can size the masking element for the content based on the size of the object that includes the content. For example, if non-whitelisted text is included in a button, the evaluation apparatus 110 can size the masking element based on the size of the button, e.g., to fit within the button.

Some user interface elements can include both whitelisted and non-whitelisted content. For example, a block of text can include multiple fields, one being a title for the block and another being account information of a user. In this example, the title fields may be included in the whitelist, e.g., in the form of a rule, and the account information fields may not be in the whitelist. In this example, the masked portion for the account information may take up an unknown portion of the block of text since the actual text is not provided. For example, the account information can vary from person to person. To size a masked element for the block of text appropriately, the application 121 can record the size of the block of text and provide that information to the evaluation apparatus 110.

At playback time, the evaluation apparatus 110 can determine the size of the masking element based on the size of the block of text. As the contribution to the location and size of the block of text made by the text in title is known based on the actual text being sent from the application 121 to the evaluation apparatus 110, the evaluation apparatus 110 can size the masking element based on the remaining area of the block of text and optionally the location of the two portions of text. For example, if the account information is below the title and the title occupies the top half of the block of text, the evaluation apparatus 110 can size the account information masking element to fill the bottom half of the block of text.

In some cases, changes to a user interface or the structure of the user interface can cause changes in the sizes of content presented by the user interface. For example, a change in a class can result in a change in a style element which results in a change in the size of a user interface element. To detect changes in the size of user interface elements, the application 121 can use the ResizeObserver API (or other appropriate code) in supported browsers. The ResizeObserver API detects and reports changes to the rectangle in which the content of an element can be placed. The application 121 can include data reported by the ResizeObserver API in the event data 115. The evaluation apparatus 110 can use the data specifying the new size of the element to resize the content of the element in the playback of the user session.

For browsers that do not support the ResizeObserver API, the evaluation apparatus 110 can generate a hierarchical graph of user interface elements that represents the user interface elements that can cause changes in the size of other user interface elements. The evaluation apparatus 110 can generate the graph using the DOM of the user interface. The size of a first user interface element (e.g., child node) that is nested within a second user interface element (e.g., parent node or grandparent node) can be affected by changes to the second user interface element. The evaluation apparatus 110 can detect changes to user interface elements based on the mutation data included in the event data 115. If a user interface element that could impact non-whitelisted content is changed, the evaluation apparatus 110 can measure the size of the user interface element that includes the non-whitelisted content. If the size has changed, the evaluation apparatus 110 can change the size of the non-whitelisted content at the corresponding time in the playback of the user interface.

This graph can also be used to determine which elements to measure the size of for the purpose of sizing non-whitelisted content. For example, the application 121 or the evaluation apparatus 121 can measure the size of each user interface element corresponding to the parent node of non-whitelisted content, without measuring the size of the user interface elements corresponding to other nodes.

The session activity data 117 can present to the publisher 130 a list of events that occurred during the user session. As playback of the user session is presented, (e.g., showing mouse movements and visual changes), the list of events can be highlighted to show which event corresponds to the visual changes that are being presented in the playback.

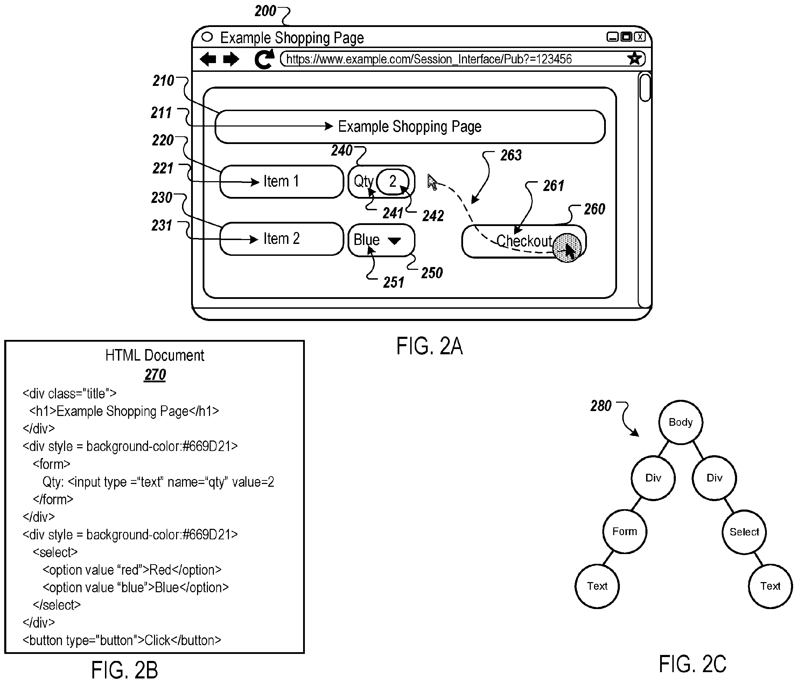

FIG. 2A is an illustration of an example user interface 200 presented during a user session. The user interface 200 is an example shopping web page presented by a web browser in response to a user navigating to the URL for the web page. The user interface 200 includes a page title 210 with the text 211 ("Example Shopping Page"). The user interface 200 also includes an element 220 with text 221 ("Item 1"), an element 230 with text 231 ("Item 2"), a form 240 with text 241 ("Qty") and a text entry field 242, a drop down menu 250 with a value 251 ("Blue") presented in the menu 250, and a checkout button 260 with text 261 ("Checkout"). As shown by the dashed line 263, the user viewing the user interface focused a cursor on the quantity form 240 and then moved the cursor over the checkout button 260 and selected the checkout button 260.

A user device presenting the user interface 200 can provide event data to the evaluation apparatus 110 of FIG. 1. In this example, the event data would include interface data specifying the structure of the user interface 200. The event data would also include user interaction data specifying the focus of the cursor on the quantity form 240, movement of the cursor to the checkout button 260, and the selection of the checkout button 260.

The event data can also include the text presented in the user interface 200 if the text is whitelisted content. In this example, assume that the whitelist for the publisher of the user interface 200 is the whitelist 115 of FIG. 1. That is, the whitelist specifies that content within the "value" field of form tags is whitelisted; that content within the "h1" field of "title" classes is whitelisted, and that content within the "button class" is whitelisted.

Referring now to FIG. 2B, which shows a portion of an example HTML document 270 used to generate the user interface of FIG. 2A. In particular, the portion of the HTML document shows a portion of the language for the page title 210, the quantity form 240, the drop down menu 250, and the checkout button 260. However, the portion of the HTML document 270 does not show all of the language that would be required to generate the user interface 200.

As can be seen from the portion of the HTML document 270, the text 211 of the page title 210 is in the h1 field of title class tags. Thus, the text 211 is whitelisted content. Similarly, the text 242 of the quantity form 240 is in the value field of form tags and is whitelisted content. In addition, the text 261 of the content button 260 is within button tags and is whitelisted content. As the text 351 of the drop down menu 350 is within option value fields of select tags, which are not specified by the whitelist 115, the text 351 is not whitelisted content. Thus, in this example, the text 211, the text 242, and the text 261 would be included in the event data. However, the text 251 would be blocked from the event data since the text is not within whitelisted tags. Assume for the rest of this example that the text 221 and 231 is also not whitelisted content based on the tags of the HTML document 270 (not shown) that include the text are not specified by the whitelist 115.

FIG. 2C is an illustration of a tree structure 280 of a portion of the user interface of FIG. 2A. The illustrated portion shows the node for the body element that includes the user interface elements shown in the user interface 200, the nodes for the div element for the quantity form 240 and its text 241, and the nodes for the div element for the drop down menu 250 and its text 251. As the text 251 of the drop down menu 250 is not whitelisted, the size of the text 251 would be determined based on the size of the drop down menu 250 (e.g., based on the size of the rectangle in which the content of the drop down menu 250 can be placed) since the text 251 is within the drop down menu 250 and the node for the text 251 is a child of the node for the down menu 250.

The graph 280 can also be used to determine when to check the size of non-whitelisted content, such as the text 251. For example, if the style of the body changes, this change can affect the size of the text 251 as the node for the text 251 is a grandchild of the node for the body.

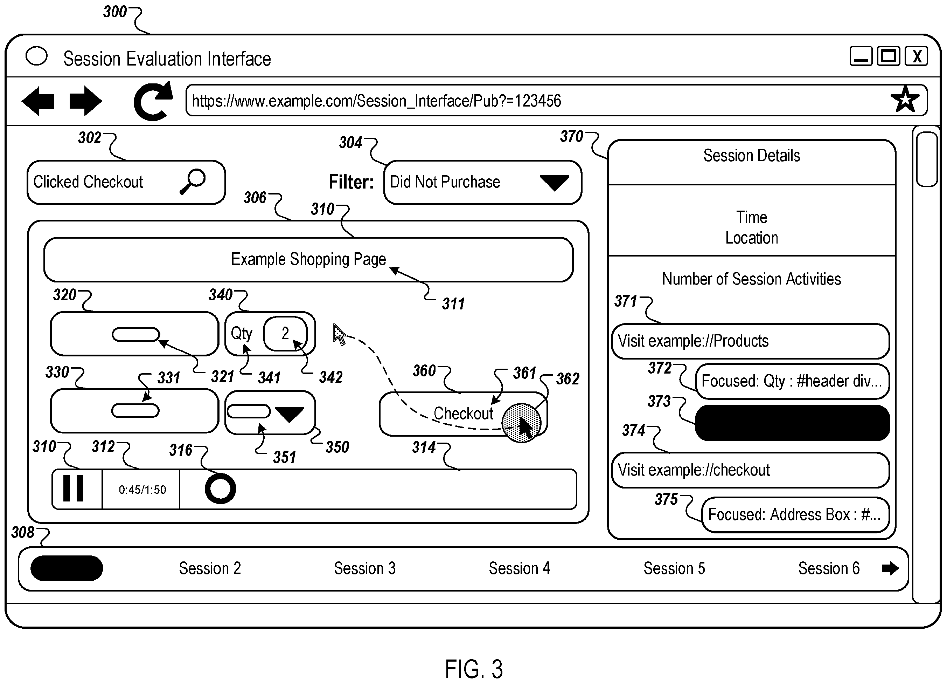

FIG. 3 is an illustration of an example interactive interface 300 for replaying a user session. The interactive interface 300 replays the user session with the user interface 200 of FIG. 2. For example, the evaluation apparatus 110 of FIG. 1 can generate playback of the user session based on the event data received from the user device that presented the user interface.

The user interface 300 includes a search field 302 that receives search criteria for identifying sessions. For example, assume that a publisher is interested in identifying and/or viewing sessions during which a user clicked a checkout button 304 of a given website (or native application) can enter the search phrase "clicked checkout" in the search field 302. Upon submission of the search phrase (e.g., inputting and enter command or clicking on a submission button), a request for session information is transmitted to the evaluation apparatus 110, which may include a search apparatus. The request for session information can include, for example, the search phrase, and identity of the publisher requesting the session information, and/or other information that provides context associated with the request.

In response to receiving the request for session information, the evaluation apparatus 110 can use the search phrase "clicked checkout" to identify one or more sessions during which a user clicked the checkout button 304 of the given website. In some implementations, the evaluation apparatus 110 identifies sessions responsive to the search phrase from an index of user sessions. For example, the index may include one or more entries associating the user action "click" and the user interface element "checkout button" with sessions during which a user clicked on the "checkout" button 304.

The evaluation apparatus 110 provides data identifying sessions responsive to the request for session information to the requesting device. In some implementations, the evaluation apparatus 110 can respond to the request for session information by providing data about one or more sessions that were identified based on the search phrase. Continuing with the example above, the evaluation apparatus 110 can provide a list of sessions 308 that were identified from the index based on the search phrase "clicked checkout." As illustrated by FIG. 3, the sessions in which a user clicked a checkout button include Session 1, Session 2, Session 3, Session 4, Session 5, and Session 6.

The evaluation apparatus 110 can also provide playback data and session activity data for one or more of the identified sessions in response to the request for session information. For example, as illustrated by FIG. 3 Session 1 is shaded, indicating that playback data for Session 1 is available for replay, and that session activity data for Session 1 are available for presentation.

The user interface 300 includes a playback region 306 in which previous sessions are replayed based on the playback data. The playback region 306 includes a playback bar, which includes a play/pause portion 310, a counter 312, and a slider portion 314. The play/pause portion 310 enables a publisher to start and stop replay of the session by interacting with the play/pause portion 310. The counter 312 provides a total duration of the session (e.g., 1 minute 50 seconds) and a portion of the session that is currently being presented (e.g., 45 seconds). The slider portion 314 enables a publisher to quickly move to other portions of the session by sliding a sliding element 316 within the slider portion 314. Continuing with the example above, the playback region 306 is replaying Session 1, as indicated by the shading of Session 1 in the list of sessions.

The playback of Session 1 shows a recreation of the user interface 200 of FIG. 2 based on the event data received from the user device at which the user session occurred. In particular, the replay shows a page title 310 with text 311 that corresponds to the page title and text 211; an element 320 with a masked element 321 that corresponds to the element 220 and text 221; an element 330 with a masked element 331 that corresponds to the element 320 and text 321, a quantity form 340 with text 341 and text entry field 342 that corresponds to the quantity form 240 with text 24 and text entry field 242; drop down menu 350 with a masked element 351 that corresponds to the drop down menu 250 with text 251; and a checkout button 360 with text 361 that corresponds to the checkout button 260 with text 261.

As the text of the elements 220 and 230 were not whitelisted, this text was not collected and sent to the evaluation apparatus 110. Thus, the evaluation apparatus 110 generated masking elements 321 and 331 to represent the text 221 and 231, respectively. As described above, the masking elements 321 and 331 can be size based on the size of the element that includes the text, namely the elements 220 and 230. In this way, the masking elements 321 and 331 fit within the elements 320 and 330, similar to the text 221 and 231 represented by the masking element 321 and 331. Similarly, the evaluation apparatus 110 included a masking element 351 in place of the text 251 of the drop down menu 350 as the text of the drop down menu 350 was not whitelisted. This masking element 351 is sized based on the size of the drop down menu 350, e.g., based on the size of the rectangular area in which content of the drop down menu 350 can be placed.

Some masking elements can include multiple masking elements to represent a string of text. For example, a respective masking element can be used to mask each word in the sentence. When generating a masking element, the evaluation apparatus 110 can start a new masking element at the beginning of each work and end the masking element when it encounters a space or punctuation indicating the end of the word.

The text 311, 341, 342, and 361 is included in the playback as the content of their corresponding user interface elements were whitelisted. In this example, the publisher of the user interface 200 may want to view how the users change the quantities in the quantity form 240 to ensure that the form functions properly and users are able to specify their desired quantities without error or frustration. However, the items being purchased may be considered sensitive information. Thus, the text 221 and 231 that represents the items is not whitelisted and is masked using the masking elements 321 and 331 in the playback of the user session.

The user interface 300 includes a session activity region 370 in which activities that occurred during the session being replayed are presented based on the session activity data. For example, the session activity region 370 presents information such as a time at which the session being replayed occurred (e.g., a day, date, time of day, and/or year), a type of browser that was used to conduct the user session, an Internet Protocol (IP) Address of a device at which the user session occurred, and/or a geographic location of the user device at which the user session occurred. The session activity region 318 can also present a number of activities (e.g., a number of clicks, focuses, page navigations, or other user interactions) that occur during the session.

The session activity region 370 also identifies and/or outlines various activities that occurred during the user session being replayed. For example, the session activity region 370 specifies that, during the session being replayed in the playback region 306 the user navigated to example.com/products 371, focused on a quantity form 340 within the page 372, clicked the checkout button 373, navigated to example.com/checkout 374, and focused on an address box 375. The activities listed in the session activity region 370 can be arranged in the order in which they occur during the session. For example, the activity 371 occurred prior to the activities 372, 373, 374, and 375. Additionally, the activities listed in the session activity region 370 can be visibly represented in a hierarchical manner. For example, each of the activities 372 and 373 are offset to the right relative to the activity 371, thereby indicating that the activities 372 and 373 occurred during the visit to example.com/products 371.

The list of activities 370 can also provide contextual data regarding the activity. For example, activity 372 indicates that the user interaction "focus" occurred with the quantity form 340. The list of activities 370 can also provide information from the structure of the user interface related to each activity. For example, each activity can include information from nodes associated with the activity from a hierarchical representation of the user interface structure (e.g., from a DOM). In a particular example, activity 372 shows a portion of the DOM nodes that provide contextual information about the quantity form 340 (e.g., #header div...). In some implementations, user interaction with the activity 372 will cause presentation of additional contextual information that is not presented in the list of activities 370 (e.g., a full set of DOM nodes that provide information related to the activity).

As replay of the session proceeds in the replay region 306, activity corresponding to the portion of the replay being presented can be highlighted. For example, after the user focuses on the quantity form 340, the user clicked on the checkout button 360. As the replay shows the mouse moving from near the quantity form 340 to the checkout button 360 (as illustrated by the dashed line), the activity 373 can be shaded (or highlighted) indicating the session activity that corresponds to the portion of the session currently being replayed. When the replay of the session reaches a point at which the user clicked the checkout button 360, the playback data can cause a shaded circle 362 to be presented, thereby visually conveying to the publisher that the user click occurred and a location of the user click on the checkout button 360. Similar animations can be used to visually convey to the publisher that other interactions occurred. For example, with reference to a touchscreen device, a similar shaded circle can be used to visually convey the occurrence of a user tap, and elongated shading animation can be used to illustrate a user swipe or other finger movement on the touchscreen.

As discussed above, a publisher can request replay of one of the other sessions (e.g., Session 2) from the user interface 300 (or another user interface). For example, user interaction with (e.g., a click of) Session 2 in the list of sessions 308 can initiate a request for session information about Session 2. In response to the request, the evaluation apparatus 110 can output, to the requesting device, playback data and session activity data related to Session 2. Upon receipt of the playback data and session activity data, the requesting device can replay Session 2 in the replay region 306, and present information about the activities that occurred during Session 2 in the session activity region 318.

In some implementations, the user interface 300 can include a filter element 304. The filter element 304 enables a publisher to filter sessions identified using, for example, the submitted search phrase. For example, a publisher may be interested in identifying only the sessions during which a user clicked on the checkout button 360, but did not ultimately make a purchase. In this example, the user can submit the search phrase "clicked checkout," and interact with the filter element 304 to select a filter that identifies only those sessions during which the user did not make a purchase (e.g., by clicking on a drop-down button and selecting the "did not purchase" option). This enables the publisher to quickly identify sessions of interest, and/or identify what might have prevented these users from making a purchase (e.g., issues with the user interface).

An example filter is provided here for purposes of illustration, but various other filters can be used and specified as desired. For example, publishers may be interested in evaluating only those sessions that were performed in a specific geographic region (e.g. Southeast United States, Central America, Europe) or only those sessions during which a user terminated the session prior to some specified duration (e.g., within 2 minutes). As discussed in more detail below, providing filters such as these and/or analytic information related to sessions identified using filters can provide a publisher with insight regarding how to better format their user interface and/or achieve specific business goals (e.g., increase sales).

In some implementations, the publisher of the user interface 200 can update the whitelist for the user interface 200 by simply interacting with the user interface elements in the playback of a user session. For example, if the publisher decides that it does not need to view the quantity of the item presented in the quantity form 240, the publisher can select the quantity value 342 in the replay region 306. The evaluation apparatus 110 can detect the selection and update the whitelist status of the quantity value 242 of the quantity form 240. In this example, the evaluation apparatus 110 would change the whitelist status of the quantity value 242 to non-whitelisted content, e.g., by removing from the whitelist 120 the "Tag:form; Field: value" that specifies that this value is whitelisted. For subsequent user sessions with the user interface 200, the quantity value 342 would be not be collected and sent to the evaluation apparatus 110. The publisher can add the quantity value 242 back to the whitelist 120 be selecting the value 342 in the playback of Session 1 or another session with the user interface 200.

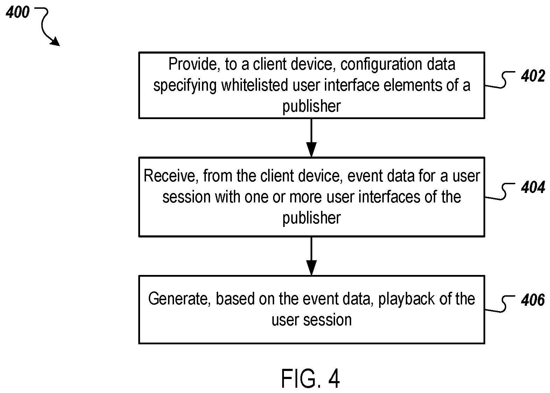

FIG. 4 is a flow chart of an example process 400 for generating and providing an interactive interface that presents playback of a user session. Operations of the process 400 can be performed, for example, by one or more data processing apparatus, such as the evaluation apparatus 110. Operations of the process 400 can also be implemented as instructions stored on a non-transitory computer readable medium. Execution of the instructions cause one or more data processing apparatus to perform operations of the process 400.

Configuration data is provided to a client device (402). The configuration data specifies a set of whitelisted user interface elements of a publisher. Each whitelisted user interface element is a user interface element from which content is eligible to be collected and transmitted from the client device. For example, as described above, the configuration data can specify tags, fields, attributes, or other user interface structure indicators from which whitelisted content can be obtained and sent to an evaluation apparatus.

The configuration data can be sent to the client device in response to the client device loading a user interface of the publisher. For example, the application loading the user interface or the user interface itself can be configured to request the configuration data in response to the loading. In this way, the current whitelist is provided to the client device for collecting event data to send to the evaluation apparatus.

Event data is received from the client device (404). The client device can collect the event data and send the event data to the evaluation apparatus during the user session or at the conclusion of the user session. As described above, the event data can include interface data specifying a structure of the one or more user interfaces presented during the user session and user interaction data specifying user interactions with the one or more user interfaces. The event data can also include mutation data specifying changes to the structure of the user interface during the user session.

The event data can also include content of one or more presented user interface elements that were presented by the one or more user interfaces and (match a whitelisted user interface element specified by the configuration data. For example, the application presenting the user interface(s) of the publisher can compare the user interface elements to the whitelisted user interface elements specified by the configuration data. For matching user interface elements, the application can obtain the content of the user interface element and provide the content with the event data. For non-matching user interface elements, the application can block the collection of the content of the user interface element and not provide the content with the event data. Instead, the application can provide an identifier to the user interface element, but not the actual content presented by the user interface element.

Playback of the user session is generated based on the event data (406). The playback of the user session can present the one or more user interfaces viewed during the user session, the content of the one or more user interface elements that match whitelisted user interface element, the user interactions with the one or more user interfaces. For content of the user interface elements that do not match whitelisted user interface elements, the playback can present the user interface element without the content of the user interface element. Instead, the playback can include a masking element that represents the content. As described above, the masking element can be sized based on the size of the user interface element that included the content.

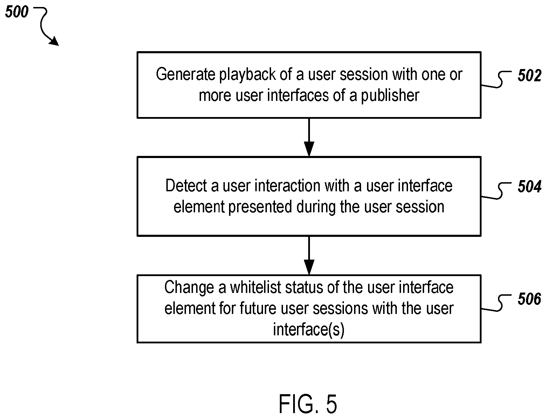

FIG. 5 is a flow chart of an example process 500 for updating a whitelist status of a user interface element. Operations of the process 500 can be performed, for example, by one or more data processing apparatus, such as the evaluation apparatus 110. Operations of the process 500 can also be implemented as instructions stored on a non-transitory computer readable medium. Execution of the instructions cause one or more data processing apparatus to perform operations of the process 500.

In some implementations, no content of a publisher is whitelisted until the publisher adds the content to the whitelist. This ensures that no sensitive data is collected unless requested by the publisher. The publisher can then add content to the whitelist as needed.

Playback of a user session with one or more user interfaces of a publisher is generated (502). The playback can be generated using the process 400 of FIG. 4.

A user interaction with a user interface element presented in the playback is detected (504). For example, a publisher can select a user interface element to change the whitelist status of the content of the user interface element. If the user interface element includes multiple content items, e.g., multiple fields, the particular field selected can be detected and recorded.

The whitelist status of the user interface element is changed (506). If the user interface element or particular field of the user interface element is currently included in the whitelist for the publisher, the whitelist status of the user interface element or particular field can be updated to no longer be whitelisted. For example, the tags or fields for the content can be removed from the whitelist.

If the user interface element or particular field of the user interface element is not currently included in the whitelist for the publisher, the whitelist status of the user interface element or particular field can be updated to be whitelisted. For example, the tags or fields for the content can be added to the whitelist.

The updated whitelist can be provided to client devices when the client devices load a user interface of the publisher. In this way, the updated whitelist is used to collect event data for playback of subsequent user sessions.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method (400), comprising:
providing (402), to a client device, configuration data specifying a set of whitelisted user interface elements of a publisher, each whitelisted user interface element being a user interface element from which content is eligible to be collected and transmitted from the client device;
receiving (404), from the client device and for a user session in which a user interacted with one or more user interfaces of the publisher, event data including:
interface data specifying a structure of the one or more user interfaces presented during the user session,
user interaction data specifying user interactions with the one or more user interfaces,
content of one or more first presented user interface elements that i) were presented by the one or more user interfaces and ii) match a whitelisted user interface element specified by the configuration data, wherein the client device does not provide non-whitelisted content of one or more second presented user interface elements that do not match a whitelisted user interface element specified by the configuration data, and
a recorded size of an object that includes a block of text that is part of a user interface element of the one or more first presented user interface elements, wherein the user interface element includes both whitelisted and non-whitelisted content, and wherein the block of text includes the non-whitelisted content; and
generating (406), based on the event data, playback of the user session that presents i) the one or more user interfaces, ii) the content of the one or more first presented user interface elements, iii) the user interactions with the one or more user interfaces, iv) for content of the one or more second presented user interface elements, a first masking element that represents the content of the second user interface element while masking actual content of the second user interface element, and v) for the user interface element that includes both the whitelisted and the non-whitelisted content, a second masking element with the size determined for the object that includes the block of text including the non-whitelisted content.

2. The method of claim 1, wherein the configuration data specifies, for each whitelisted user interface element, a given field within a given set of tags.

3. The method of claim 2, wherein a presented user interface element matches a whitelisted user interface element whenever the presented user interface element is defined by the given field of the given set of tags.

4. The method of claim 2, wherein the given set of tags comprises tags of a document object model that represents, for each of the one or more user interfaces, the structure of the user interface.

5. The method of claim 2, wherein one or more user interfaces comprise Hypertext Markup Language, HTML, documents and the given set of tags comprise HTML tags.

6. The method of claim 1, further comprising:
detecting, during the playback of the user session, a user interaction with a user interface being presented by at least one of the one or more user interfaces in the playback of the user session; and
in response to detecting the user interaction, changing a whitelist status of the user interface element, wherein the whitelist status specifies whether a content item includes content to be collected from the client device.

7. The method of claim 6, wherein changing the whitelist status of the content item comprises:
determining, from the interface data specifying the structure of the user interface that includes the user interface element, a field that includes content of the user interface element;
whenever the field is on a whitelist that specifies the whitelisted content, removing the field from the whitelisted content; and
whenever the field is not on the whitelist that specifies the whitelisted content, adding the field to the whitelist.

8. The method of claim 1, wherein generating playback of the user session comprises:
identifying, in the interface data specifying the structure of the one or more user interfaces presented during the user session, tags for a given second user interface element;
determining a presentation size of an object that includes content of the given second user interface element; and
sizing a masking element that represents the content of the given second user interface element based on the presentation size of the object.

9. The method of claim 1, wherein providing, to a client device, configuration data specifying a set of whitelisted user interface elements comprises:
receiving, from the client device, a request for the configuration data in response to loading one of the one or more user interfaces of the application ; and
in response to receiving the request, providing the configuration data.

10. A system comprising:
a data store; and
one or more computers that interact with the data store and execute instructions that cause the one or more computers to perform operations according to the methods of any one of claims 1 to 9.

11. A non-transitory computer readable medium storing instructions that upon execution by one or more computers cause the one or more computers to perform operations according to the methods of any one of claim 1 to 9.

## Patentansprüche

1. Verfahren (400), umfassend:
Bereitstellen (402), an eine Client-Vorrichtung, von Konfigurationsdaten, die einen Satz von auf einer Whitelist stehenden Benutzerschnittstellenelementen eines Veröffentlichers spezifizieren, wobei jedes auf der Whitelist stehende Benutzerschnittstellenelement ein Benutzerschnittstellenelement ist, aus dem Inhalt gesammelt und von der Client-Vorrichtung übertragen werden kann;
Empfangen (404), von der Client-Vorrichtung und für eine Benutzersitzung, in der ein Benutzer mit einer oder mehreren Benutzerschnittstellen des Veröffentlichers interagierte, von Ereignisdaten, einschließlich:
Schnittstellendaten, die eine Struktur der einen oder der mehreren Benutzerschnittstellen spezifizieren, die während der Benutzersitzung dargestellt werden,
Benutzerinteraktionsdaten, die Benutzerinteraktionen mit der einen oder den mehreren Benutzerschnittstellen spezifizieren,
Inhalte eines oder mehrerer erster dargestellter Benutzerschnittstellenelemente, die i) durch die eine oder die mehreren Benutzerschnittstellen dargestellt wurden, und ii) mit einem auf der Whitelist stehenden Benutzerschnittstellenelement übereinstimmen, das durch die Konfigurationsdaten spezifiziert wird, wobei die Client-Vorrichtung keinen nicht auf der Whitelist stehenden Inhalt eines oder mehrerer zweiter dargestellter Benutzerschnittstellenelemente bereitstellt, die nicht mit einem auf der Whitelist stehenden Benutzerschnittstellenelement übereinstimmen, das durch die Konfigurationsdaten spezifiziert wird, und
eine aufgezeichnete Größe eines Objekts, das einen Textblock beinhaltet, der Teil eines Benutzerschnittstellenelements des einen oder der mehreren ersten dargestellten Benutzerschnittstellenelemente ist, wobei das Benutzerschnittstellenelement sowohl auf der Whitelist stehenden als auch nicht auf der Whitelist stehenden Inhalt beinhaltet, und wobei der Textblock den nicht auf der Whitelist stehenden Inhalt beinhaltet; und
Erzeugen (406), basierend auf den Ereignisdaten, einer Wiedergabe der Benutzersitzung, die i) die eine oder die mehreren Benutzerschnittstellen, ii) den Inhalt des einen oder der mehreren ersten dargestellten Benutzerschnittstellenelemente, iii) die Benutzerinteraktionen mit der einen oder den mehreren Benutzerschnittstellen, iv) für Inhalt des einen oder der mehreren zweiten dargestellten Benutzerschnittstellenelemente, ein erstes Maskierungselement, das den Inhalt des zweiten Benutzerschnittstellenelements repräsentiert, während der tatsächliche Inhalt des zweiten Benutzerschnittstellenelements maskiert wird, und v) für das Benutzerschnittstellenelement, das sowohl den auf der Whitelist stehenden als auch den nicht auf der Whitelist stehenden Inhalt beinhaltet, ein zweites Maskierungselement mit der für das Objekt bestimmten Größe, das den Textblock beinhaltet, der den nicht auf der Whitelist stehenden Inhalt beinhaltet, darstellt.

2. Verfahren nach Anspruch 1, wobei die Konfigurationsdaten, für jedes auf der Whitelist stehende Benutzerschnittstellenelement, ein gegebenes Feld innerhalb eines gegebenen Satzes von Tags spezifizieren.

3. Verfahren nach Anspruch 2, wobei ein dargestelltes Benutzerschnittstellenelement mit einem auf der Whitelist stehenden Benutzerschnittstellenelement immer dann übereinstimmt, wenn das dargestellte Benutzerschnittstellenelement durch das gegebene Feld des gegebenen Satzes von Tags definiert wird.

4. Verfahren nach Anspruch 2, wobei der gegebene Satz von Tags Tags eines Dokumentobjektmodells umfasst, das für jede der einen oder der mehreren Benutzerschnittstellen die Struktur der Benutzerschnittstelle repräsentiert.

5. Verfahren nach Anspruch 2, wobei eine oder mehrere Benutzerschnittstellen Hypertext Markup Language- bzw. HTML-Dokumente umfassen und der gegebene Satz von Tags HTML-Tags umfasst.

6. Verfahren nach Anspruch 1, ferner umfassend:
Detektieren, während der Wiedergabe der Benutzersitzung, einer Benutzerinteraktion mit einer Benutzerschnittstelle, die durch mindestens eine der einen oder der mehreren Benutzerschnittstellen bei der Wiedergabe der Benutzersitzung dargestellt wird; und
als Reaktion auf das Detektieren der Benutzerinteraktion, Ändern eines Whitelist-Status des Benutzerschnittstellenelements, wobei der Whitelist-Status spezifiziert, ob ein Inhaltselement Inhalt beinhaltet, der von der Client-Vorrichtung zu sammeln ist.

7. Verfahren nach Anspruch 6, wobei das Ändern des Whitelist-Status des Inhaltselements umfasst:
Bestimmen, aus den Schnittstellendaten, die die Struktur der Benutzerschnittstelle spezifizieren, die das Benutzerschnittstellenelement beinhaltet, eines Feldes, das Inhalt des Benutzerschnittstellenelements beinhaltet;
wann auch immer das Feld auf einer Whitelist steht, die den auf der Whitelist stehenden Inhalt spezifiziert, Entfernen des Feldes von dem auf der Whitelist stehenden Inhalt; und
wann auch immer das Feld nicht auf einer Whitelist steht, die den auf der Whitelist stehenden Inhalt spezifiziert, Hinzufügen des Feldes zur Whitelist.

8. Verfahren nach Anspruch 1, wobei das Erzeugen einer Wiedergabe der Benutzersitzung umfasst:
Identifizieren, in den Schnittstellendaten, die die Struktur der einen oder der mehreren Benutzerschnittstellen spezifizieren, die während der Benutzersitzung dargestellt werden, von Tags für ein gegebenes zweites Benutzerschnittstellenelement;
Bestimmen einer Darstellungsgröße eines Objekts, das Inhalt des gegebenen zweiten Benutzerschnittstellenelements beinhaltet; und
Dimensionieren eines Maskierungselements, das den Inhalt des gegebenen zweiten Benutzerschnittstellenelements repräsentiert, basierend auf der Darstellungsgröße des Objekts.

9. Verfahren nach Anspruch 1, wobei das Bereitstellen, an eine Client-Vorrichtung, von Konfigurationsdaten, die einen Satz von auf einer Whitelist stehenden Benutzerschnittstellenelementen spezifizieren, umfasst:
Empfangen, von der Client-Vorrichtung, einer Anforderung für die Konfigurationsdaten als Reaktion auf das Laden von einer der einen oder der mehreren Benutzerschnittstellen der Anwendung; und
als Reaktion auf das Empfangen der Anforderung, Bereitstellen der Konfigurationsdaten.

10. System, umfassend:
einen Datenspeicher; und
einen oder mehrere Computer, die mit dem Datenspeicher interagieren und Anweisungen ausführen, die den einen oder die mehreren Computer veranlassen, Operationen gemäß den Verfahren nach einem der Ansprüche 1 bis 9 durchzuführen.

11. Nichtflüchtiges computerlesbares Medium, das Anweisungen speichert, die bei Ausführung durch einen oder mehrere Computer den einen oder die mehreren Computer veranlassen, Operationen gemäß den Verfahren nach einem der Ansprüche 1 bis 9 durchzuführen.

## Revendications

1. Procédé (400) comportant les étapes consistant à :
fournir (402), à un dispositif client, des données de configuration spécifiant un ensemble d'éléments d'interface d'utilisateur en liste blanche d'un éditeur, chaque élément d'interface d'utilisateur en liste blanche étant un élément d'interface d'utilisateur à partir duquel un contenu est éligible pour être recueilli et transmis à partir du dispositif client ;
recevoir (404), en provenance du dispositif client et pour une session d'utilisateur lors de laquelle un utilisateur a interagi avec une ou plusieurs interfaces d'utilisateur de l'éditeur, des données d'événement comprenant :
des données d'interface spécifiant une structure de l'interface ou des interfaces d'utilisateur présentées pendant la session d'utilisateur,
des données d'interactions d'utilisateur spécifiant des interactions d'utilisateur avec l'interface ou les interfaces d'utilisateur,
un contenu d'un ou de plusieurs premiers éléments d'interface d'utilisateur présentés qui i) ont été présentés par l'interface ou les interfaces d'utilisateur et ii) correspondent à un élément d'interface d'utilisateur en liste blanche spécifié par les données de configuration, le dispositif client ne fournissant pas un contenu hors liste blanche d'un ou de plusieurs seconds éléments d'interface d'utilisateur présentés qui ne correspondent pas à un élément d'interface d'utilisateur en liste blanche spécifié par les données de configuration, et
une taille enregistrée d'un objet qui comprend un bloc de texte qui fait partie d'un élément d'interface d'utilisateur parmi le ou les premiers éléments d'interface d'utilisateur présentés, l'élément d'interface d'utilisateur comprenant à la fois du contenu en liste blanche et hors liste blanche, et le bloc de texte comprenant le contenu hors liste blanche ; et
générer (406), d'après les données d'événement, une reproduction de la session d'utilisateur qui présente i) l'interface ou les interfaces d'utilisateur, ii) le contenu du ou des premiers éléments d'interface d'utilisateur présentés, iii) les interactions d'utilisateur avec l'interface ou les interfaces d'utilisateur, iv) pour un contenu du ou des seconds éléments d'interface d'utilisateur présentés, un premier élément de masquage qui représente le contenu du second élément d'interface d'utilisateur tout en masquant un contenu proprement dit du second élément d'interface d'utilisateur, et v) pour l'élément d'interface d'utilisateur qui comprend à la fois le contenu en liste blanche et hors liste blanche, un second élément de masquage de la taille déterminée pour l'objet qui comprend le bloc de texte incluant le contenu hors liste blanche.

2. Procédé selon la revendication 1, les données de configuration spécifiant, pour chaque élément d'interface d'utilisateur en liste blanche, un champ donné à l'intérieur d'un ensemble donné de balises.

3. Procédé selon la revendication 2, un élément d'interface d'utilisateur présenté correspondant à un élément d'interface d'utilisateur en liste blanche chaque fois que l'élément d'interface d'utilisateur présenté est défini par le champ donné de l'ensemble donné de balises.

4. Procédé selon la revendication 2, l'ensemble donné de balises comportant des balises d'un modèle objet de document qui représente, pour l'interface ou chacune des interfaces d'utilisateur, la structure de l'interface d'utilisateur.

5. Procédé selon la revendication 2, une ou plusieurs interfaces d'utilisateur comportant des documents en langage de balisage hypertexte, HTML, et l'ensemble donné de balises comportant des balises HTML.

6. Procédé selon la revendication 1, comportant en outre les étapes consistant à :
détecter, pendant la reproduction de la session d'utilisateur, une interaction d'utilisateur avec une interface d'utilisateur qui est présentée par l'interface ou au moins une des interfaces d'utilisateur lors de la reproduction de la session d'utilisateur ; et
en réponse à la détection de l'interaction d'utilisateur, modifier un état de liste blanche de l'élément d'interface d'utilisateur, l'état de liste blanche spécifiant si un élément de contenu comprend un contenu à recueillir à partir du dispositif client.

7. Procédé selon la revendication 6, la modification de l'état de liste blanche de l'élément de contenu comportant les étapes consistant à :
déterminer, à partir des données d'interface spécifiant la structure de l'interface d'utilisateur qui comprend l'élément d'interface d'utilisateur, un champ qui comprend un contenu de l'élément d'interface d'utilisateur ;
chaque fois que le champ figure sur une liste blanche qui spécifie le contenu en liste blanche, retirer le champ du contenu en liste blanche ; et
chaque fois que le champ ne figure pas sur la liste blanche qui spécifie le contenu en liste blanche, ajouter le champ à la liste blanche.

8. Procédé selon la revendication 1, la génération d'une reproduction de la session d'utilisateur comportant les étapes consistant à :
identifier, dans les données d'interface spécifiant la structure de l'interface ou des interfaces d'utilisateur présentées pendant la session d'utilisateur, des balises relatives à un second élément donné d'interface d'utilisateur ;
déterminer une taille de présentation d'un objet qui comprend un contenu du second élément donné d'interface d'utilisateur ; et
dimensionner un élément de masquage qui représente le contenu du second élément donné d'interface d'utilisateur d'après la taille de présentation de l'objet.

9. Procédé selon la revendication 1, la fourniture, à un dispositif client, de données de configuration spécifiant un ensemble d'éléments d'interface d'utilisateur en liste blanche comportant les étapes consistant à :
recevoir, en provenance du dispositif client, une demande portant sur les données de configuration en réponse au chargement de l'interface ou d'une des interfaces d'utilisateur de l'application ; et
en réponse à la réception de la demande, fournir les données de configuration.

10. Système comportant :
un magasin de données ; et
un ou plusieurs ordinateurs qui interagissent avec le magasin de données et exécutent des instructions qui amènent l'ordinateur ou les ordinateurs à effectuer des opérations conformément aux procédés selon l'une quelconque des revendications 1 à 9.

11. Support non transitoire lisible par ordinateur conservant des instructions qui, suite à leur exécution par un ou plusieurs ordinateurs, amènent l'ordinateur ou les ordinateurs à effectuer des opérations conformément aux procédés selon l'une quelconque des revendications 1 à 9.
